Europäisches Patentamt

European Patent Office

Office européen des brevets

(11) Publication number: **0 298 545 B1**

## EUROPEAN PATENT SPECIFICATION

(45) Date of publication of patent specification: **18.03.92**    (51) Int. Cl.⁵: **F16J  1/16**, F16J 1/14, F02F 1/18

(21) Application number: **88201310.5**

(22) Date of filing: **24.06.88**

(54) Bearings.

(30) Priority: **04.07.87 GB 8715782**

(43) Date of publication of application:
**11.01.89 Bulletin  89/02**

(45) Publication of the grant of the patent:
**18.03.92 Bulletin  92/12**

(84) Designated Contracting States:
**DE FR IT**

(56) References cited:
**CH-A- 396 514**
**GB-A- 2 067 712**
**GB-A- 2 165 619**

(73) Proprietor: **T&N TECHNOLOGY LIMITED**
**Cawston House**
**Cawston Rugby Warwickshire, CV22**
**7SA(GB)**

(72) Inventor: **Slee, Roger Harvey**
**28 Oakwood Grove**
**Warwick CV34 5TD(GB)**

(74) Representative: **Hadfield, Robert Franklin et al**
**Bowdon House PO Box 20 Ashburton Road**
**West Trafford Park**
**Manchester M17 1RA(GB)**

## Description

The present invention relates to small-end bearings for pistons in internal combustion engines and compressors and particularly though not exclusively to pistons having a non-circular radial profile.

Where internal combustion engines or compressors have other than round pistons operating in round cylinder bores it is necessary to achieve a close compliance of the piston profile with the cylinder bore profile. In the case of a nominally round piston in a round cylinder bore any slight misalignment of the connecting-rod big-end and piston gudgeon pin bore axes are compensated by relatively unrestrained rotation of the piston about its axis within the cylinder bore. Where the piston and its co-operating cylinder bore are non-circular such unrestrained rotation of the piston within the cylinder bore is not possible. If slight inaccuracies exist in the connecting-rod big-end or small-end bearings or in the piston gudgeon pin bores the result will be to increase the rubbing contact between piston and bore. Such increased rubbing contact may itself produce scuffing of the piston and damage to the big-end bearing leading to rapid failure.

It is, therefore, necessary with conventionally supported pistons to ensure extreme accuracy of the gudgeon pin bore axis relative to the other piston radial profile axes. For example, with a working clearance between piston and cylinder bore of 0.03 mm and with a piston radial profile of elongated oval form having a major axis dimension of 120 mm and a minor axis dimension of 70 mm, the gudgeon pin axis must be square to the corresponding profile axes within approximately 4 seconds of arc if undesirable rubbing contacts are to be avoided.

There is disclosed in CH-A-396514 a piston and connecting-rod assembly allowing relative deflection between the piston and the connecting rod in three mutually perpendicular axes, by a bearing provided by the connecting-rod small-end comprising a generally ball-shaped portion which co-operates with a socket provided in the piston, and having a suitable clamp arrangement for retention.

According to the present invention there is provided a small-end bearing in a piston and connecting-rod assembly, allowing relative deflection between the piston and the connecting-rod in three mutually perpendicular axes, the bearing being housed in the small-end eye of the connecting-rod, and comprising a first member having an internal part-spherical bearing surface, a second member having an outer part-spherical bearing surface adapted to co-operate with the inner spherical bearing surface of the first member, the second member having a bore therethrough for receiving a gudgeon-pin to join the piston and connecting-rod together.

By employing a bearing of the "spherical" kind, minor misalignments may be catered for.

The connecting-rod may comprise a conventional small-end eye and have fitted therein a separate bearing allowing deflection in three mutually perpendicular axes of rotation. A conventional gudgeon pin may be employed.

In order that the present invention may be more fully understood, an example will now be described by way of illustration only with reference to the accompanying drawings of which:

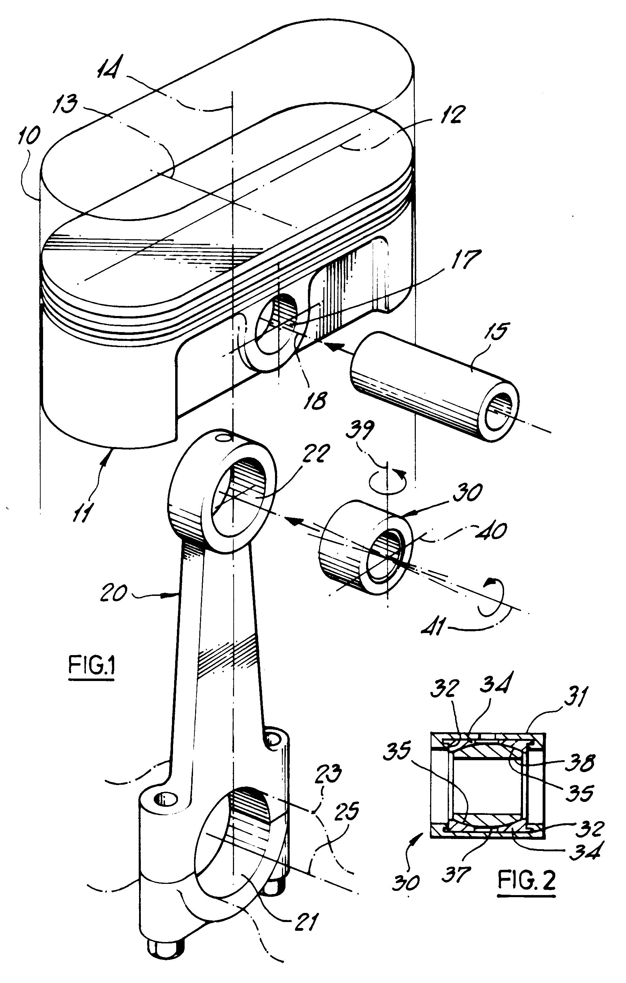

Figure 1 shows an exploded composite perspective view of a connecting-rod and piston arrangement having a bearing according to the present invention; and

Figure 2 which shows a section through the small-end bearing of Figure 1.

Referring now to the drawings and where the same features are denoted by common reference numerals.

A non-circular cylinder is denoted at 10 in which a corresponding non-circular piston 11 reciprocates. The piston has major and minor axes 12 and 13 respectively. The cylinder axis is denoted at 14. A gudgeon pin 15 is locatable in gudgeon pin boss bores 17 having an axis 18. A connecting-rod 20 having a big-end 21 and small-end eye 22 is supported on a crank pin 23 (shown dotted) having an axis 25. A small-end bearing 30 is locatable in the eye 22 by interference. The bearing 30 comprises an outer steel shell 31 having inturned flange portions 32 which locate two leaded bronze bearing portions 34 having part spherical bearing surfaces 35. The bearing surfaces 35 themselves locate a part-spherical ball 37 having a bore 38 which co-operates with the O.D. of the gudgeon pin 15.

The ball 37 is free to rotate with the gudgeon pin to a limited but adequate exent about the axes 39 and 40 and free to rotate unhindered about the axis 41 which is coincident with the gudgeon pin bore axis 18.

Thus, if during machining of the piston gudgeon pin bores 17 the axis 18 is not adequately parallel to the minor axis 13 or normal to the major axis 12 such misalignment as may be present is easily accommodated by rotation of the pin 15 about the axes 39 and/or 40. It will be evident that the piston 11 is not able to rotate in the cylinder 10 about the axis 14 by more than a minute amount before rubbing contact occurs.

Although the invention has been described with reference to a particular shape of piston it is of course applicable to any radial shape of piston including circular.

The small-end bearing may comprise any suitable materials known in the art and materials are not limited to steel and leaded bronze.

## Claims

1. A small-end bearing in a piston and connecting-rod assembly allowing relative deflection between the piston and the connecting rod in three mutually perpendicular axes, characterised in that the bearing (30) is housed in the small-end eye (22) of the connecting-rod (20), and comprises a first member (34) having an internal part-spherical bearing surface (35), a second member (37) having an outer part-spherical bearing surface adapted to co-operate with the inner spherical bearing surface of the first member, the second member having a bore (38) therethrough for receiving a gudgeon-pin (15) to join the piston (11) and connecting-rod (20) together.

2. A small-end bearing according to claim 1 characterised in that the first member (34) is retained within a shell member (31).

3. A small-end bearing according to either claim 1 or claim 2 characterised in that the first bearing member (34) comprises two portions, each having a part-spherical inner bearing surface (35) to support the second member (37).

4. A small-end bearing in a piston and connecting-rod assembly according to any one preceding claim characterised in that the piton (11) is of non-circular radial profile.

## Revendications

1. Palier de pied de bielle dans un ensemble bielle-piston permettant une flexion relative entre le piston et la bielle dans trois axes mutuellement perpendiculaires, caractérisé en ce que le palier (30) est logé dans l'oeil de pied de bielle (22) de la bielle (20), et comprend un premier organe (34) comportant une surface portante interne (35) partiellement sphérique, un second organe (37) comportant une surface portante externe partiellement sphérique adaptée à coopérer avec la surface portante interne sphérique du premier organe, le second organe comportant un alésage (38) le traversant destiné à recevoir un axe de piston (15) pour raccorder le piston (11) et la bielle (20).

2. Palier de pied de bielle selon la revendication 1, caractérisé en ce que le premier organe (34) est retenu dans une coque (31).

3. Palier de pied de bielle selon la revendication 1 ou 2, caractérisé en ce que le premier organe porteur (34) comprend deux portions, chacune comportant une surface portante interne (35) partiellement sphérique pour supporter le second organe (37).

4. Palier de pied de bielle dans un ensemble bielle-piston selon l'une quelconque des revendications précédentes, caractérisé en ce que le piston (11) a un profil radial non-circulaire.

## Patentansprüche

1. Kolbenbolzenlager in einer Kolben-Pleuelstangen-Anordnung, das relative Abweichungen zwischen dem Kolben und der Pleuelstange im drei senkrecht zueinander stehenden Achsen zuläßt, **dadurch gekennzeichnet,** daß das Lager (30) im kolbenseitigen Auge (22) der Pleuelstange (20) eingesetzt ist und ein erstes Teil (34) mit einer inneren teilkugelförmigen Lagerfläche (35) sowie ein zweites Teil (37) mit einer äußeren teilkugelförmigen Lagerfläche zum Zusammenwirken mit der inneren kugelförmigen Lagerfläche des ersten Teils umfaßt, wobei durch das zweite Teil eine Bohrung (38) zur Aufnahme eines Kolbenbolzens (15) zum Verbinden des Kolbens (11) mit der Pleuelstange (20) verläuft.

2. Kolbenbolzenlager nach Anspruch 1, dadurch gekennzeichnet, daß das erste Teil (34) in einer Hülse (31) gehaltert ist.

3. Kolbenbolzenlager nach Anspruch 1 oder 2, dadurch gekennzeichnet, daß das erste Lagerteil (34) zwei Abschnitte mit jeweils einer teilkugelförmigen inneren Lagerfläche (35) zum Stützen des zweiten Teils (37) umfaßt.

4. Kolbenbolzenlager in einer Kolben-Pleuelstangen-Anordnung nach einem der vorhergehenden Ansprüche, dadurch gekennzeichnet, daß der Kolben (11) ein nicht-kreisförmiges Radialprofil aufweist.

FIG.1

FIG.2